# EUROPÄISCHE PATENTSCHRIFT

(11) **EP 1 521 227 B1**
(45) Veröffentlichungstag und Bekanntmachung des Hinweises auf die Patenterteilung: **23.01.2019**
(21) Anmeldenummer: 04030090.7
(22) Anmeldetag: 06.09.2000
(51) Int. Cl.: G08G 1/0969, G01C 21/36, G09B 29/00

(54) **Navigationsvorrichtung**
Navigation system
Système de navigation

(30) Priorität: 15.09.1999 DE 19944080
(43) Veröffentlichungstag der Anmeldung: 06.04.2005
(62) Teilanmeldung aus: 00964117.6
(73) Patentinhaber: AUDI AG, 85045 Ingolstadt (DE)
(72) Erfinder: Hamberger, Werner, Dr., 85101 Lenting (DE); Remlinger, Wolfram, 85049 Ingolstadt (DE); Schröder, Jürgen, 90425 Nürnberg (DE)
(74) Vertreter: Mader, Wilfried

(56) Entgegenhaltungen:
- DE-A1- 19 712 048
- US-A- 4 504 913
- US-A- 4 608 656
- US-A- 4 935 728
- US-A- 5 270 689
- "MOUSE EMULATION USING A SINGLE SWITCH", IBM TECHNICAL DISCLOSURE BULLETIN, INTERNATIONAL BUSINESS MACHINES CORP. (THORNWOOD), US, vol. 34, no. 4B, 1 September 1991 (1991-09-01), page 342, XP000189577, ISSN: 0018-8689

## Beschreibung

Die Erfindung betrifft eine Navigationsvorrichtung, insbesondere zum Einbau in ein Kraftfahrzeug, gemäß dem Oberbegriff des Patentanspruchs 1.

Gattungsgemäße Navigationsvorrichtungen mit einem Monitor, auf dem eine Landkarte angezeigt werden kann, sind insbesondere für den Gebrauch in Kraftfahrzeugen allgemein bekannt. Aus dem Stand der Technik sind Navigationsvorrichtungen bekannt, bei denen ein Cursor auf der Landkarte mittels eines Joysticks bewegt werden kann. Es ist jedoch aufgrund des in einem Fahrzeug vorhandenen, limitierten Platzes unerwünscht, zum Zwecke der Cursorsteuerung ein zusätzliches Bauteil, in diesem Falle einen Joystick, vorzusehen, das für andere Zwecke entweder gar nicht oder zumindest nur in sehr beschränktem Umfang eingesetzt werden kann.

Bei einer anderen aus dem Stand der Technik bekannten Navigationsvorrichtung kann der Cursor mittels einer Kreuzwippe gesteuert werden. Auch hier wird ein zusätzliches Bauteil benötigt, weshalb auch diese Lösung unbefriedigend ist. Diese Variante hat weiterhin den Nachteil, dass der Cursor nur entlang von acht Richtungen bewegt werden kann. So gestaltet es sich als umständlich, den Cursor entlang beliebiger Richtungen zu bewegen.

Das gleiche gilt für eine weitere aus dem Stand der Technik bekannte Navigationsvorrichtung, bei der mit einem Drehschalter zunächst die eine Koordinate des Cursors auf die Sollkoordinate gebracht wird, dann, nach einem durch Drücken des Drehschalters ausgelösten Umschaltvorgang, die andere senkrecht zur ersten verlaufende.

Aus der US 4 608 656 ist eine Straßenkartenanzeige für ein Auto bekannt, wobei im Zentrum der Anzeige eine Art Cursor dargestellt ist, der die Position des Autos auf der Straßenkarte wiederspiegelt und die Fahrtrichtung anzeigt. Während der Fahrt mit dem Auto wird die Karte automatisch so bewegt, dass sich der Cursor immer im Zentrum der Karte befindet. Außerdem wird die Karte entsprechend der Fahrtrichtung gedreht. Für die Eingabe der Anfangsposition des Fahrzeugs ist ein Joystickpaar vorgesehen. Außerdem ist eine sogenannte Maßstabsauswahleinheit vorgesehen, mit der der Maßstab der Straßenkarte ausgewählt werden kann. Der Mittelpunkt bleibt vorzugsweise bei dieser Maßstabswahl erhalten. Als Bedienelemente werden eine Tastatur und das erwähnte Joystickpaar verwendet.

In diesem Zusammenhang sei ferner auf die EP 0 961 198 A2 verwiesen, deren Inhalt zum Stand der Technik nach Artikel 54 (3) und (4) EPÜ zählt und für die die Vertragsstaaten DE, ES, FR und GB benannt wurden. Aus diesem Dokument ist ein elektronisches Gerät mit einem Drehschalter und einem Anzeigebildschirm zur Anzeige von Informationen bekannt. Der Bildschirm kann entweder ein Menü zur Auswahl von Funktionen anzeigen, wobei mit Hilfe des Drehschalters ein Cursor auf dem Bildschirm bewegt wird. Der Bildschirm kann außerdem auch einen Kartenausschnitt zeigen, der mit Hilfe des Drehschalters bewegt werden kann. Dabei erfolgt zuerst die Auswahl der Bewegungsrichtung bei Stillstand des Cursors oder des Kartenausschnitts durch Drehen des Drehschalters. Die Bewegung des Cursors oder des Kartenausschnitts erfolgt dann durch eine Axialbewegung des Drehschalters.

Die DE 197 12 048 beschreibt eine Bedienvorrichtung, bei der mit einem Stellglied in Form eines Drehschalters zwischen verschiedenen Funktionen umgeschaltet werden kann, einzelne Funktionen mittels eines zusätzlichen Schalters auswählbar sind und in der ausgewählten Funktion wiederum mit demselben Stellglied die Funktionswerte der ausgewählten Funktion umschaltbar sind und mit dem zusätzlichen Schalter ausgewählt werden können. Als zusätzlicher Schalter ist hierbei eine Bedienwippe vorgesehen mit der je nach Stellung verschiedene Schaltfunktionen ausführbar sind.

US 5 270 689 A beschreibt einen Drehschalter, der in zwei Richtungen drehbar ist und auch gedrückt werden kann. Weiterhin kann auf einer Anzeigeeinrichtung ein Menü mit mehreren Menüpunkten angezeigt werden.

Weitere Vorrichtungen den technologischen Hintergrund der Erfindung betreffend sind aus der US 4 935 728 A und der US 4 504 913 A bekannt.

Vor diesem Hintergrund liegt der Erfindung die Aufgabe zugrunde, eine gattungsgemäße Navigationsvorrichtung derart weiterzubilden, dass sie die Steuerung eines Cursors auf einfache und bedienungsfreundliche Art und Weise ermöglicht, wobei der Platzbedarf für die Steuerungsvorrichtung möglichst klein gehalten werden soll.

Diese Aufgabe wird gelöst durch eine Navigationsvorrichtung gemäß den Merkmalen des Patentanspruchs 1. Die Unteransprüche betreffen besonders zweckmäßige Weiterbildungen der Erfindung.

Die Erfindung geht davon aus, dass sich die Cursorsteuerung in zwei Einzelaspekte zerlegen lässt: zum einen die Wahl einer Bewegungsrichtung des Cursors, zum anderen das Auslösen oder das Durchführen einer Bewegung des Cursors. Erfindungsgemäß wird daher eine Navigationsvorrichtung bereitgestellt, die einen Drehschalter umfasst, wobei in einem ersten Bedienmodus des Drehschalters durch Drehung des Drehschalters unabhängig von einer Bewegung des Cursors eine Bewegungsrichtung des Cursors auf der Abbildung wählbar ist und in einem zweiten Bedienmodus des Drehschalters durch Drehung des Drehschalters eine weitere Aufgabe ausführbar ist, nämlich ist die Bewegung des Cursors entlang oder entgegen der ausgewählten Bewegungsrichtung ausführbar. Durch eine axiale Krafteinwirkung auf den Drehschalter ist die Bewegung des Cursors entlang oder entgegen der ausgewählten Bewegungsrichtung ausführbar oder auslösbar oder der erste Bedienmodus und/oder zweite Bedienmodus ist durch eine axiale Bewegung des Drehschalters einstellbar. Dadurch ist der Drehschalter besonders platzsparend. Für den Benutzer ergibt sich das Gefühl, er würde den Cursor, vorzugsweise als Pfeil dargestellt, mit der Hand drehen. Auf diese Art und Weise kann die Bewegungsrichtung des Cursors - nicht nur bei dessen Stillstand sondern auch während er sich bewegt - außerdem überaus flexibel eingestellt werden, und der Benutzer ist nicht wie in anderen Vorrichtungen an eine Bewegung in nur acht verschiedenen Richtungen, wie z. B. rechts, links, oben und unten gebunden. Die Verwendung eines Drehschalters ist deshalb besonders vorteilhaft, da ein solcher, im Vergleich zu einer Kreuzwippe oder einem Joystick, ohnehin in nahezu jedem Kraftfahrzeug vorhanden ist. Durch Benutzung eines bereits vorhandenen Drehschalters, beispielsweise in einer anderen axialen Stellung, kann die Funktion der Cursorsteuerung ohne zusätzliches Bauelement, d.h. ohne zusätzlichen Platzbedarf und bei minimalen Zusatzkosten realisiert werden.

Durch Drehung des Drehschalters kann in einem weiteren Bedienmodus die Bewegungsrichtung der Maßstab der Abbildung wählbar sein. Indem der Drehschalter, beispielsweise in anderen axialen Stellungen, noch für andere Bedienfunktionen der Navigationsvorrichtung verwendbar ist, wird der Bedienkomfort der Navigationsvorrichtung weiter gesteigert.

Eine vorteilhafte Weiterbildung der Erfindung sieht vor, dass der Mittelpunkt der Abbildung bei der Maßstabswahl erhalten bleibt, da der Benutzer den auf dem Monitor sichtbaren Abbildungsausschnitt instinktiv so wählen wird, dass der ihn interessierende Bereich der Abbildung nahezu in der Mitte liegt.

Erfindungsgemäß kann durch axiale Krafteinwirkung auf den Drehschalter in dem zweiten Bedienmodus die Bewegung des Cursors entlang oder entgegen einer ausgewählten Richtung ausführbar oder auslösbar sein, wodurch die Bedienung der Navigationsvorrichtung weiter vereinfacht wird, da der Benutzer seine Hand oder seine Finger auch für die Bewegung des Cursors nicht neu positionieren muss. Weist der Drehschalter mehrere Bedienmodi auf ist diese Funktion vorzugsweise mit den Extremstellungen des Drehschalters, d.h. ganz eingedrückt oder ganz herausgezogen, verknüpft. Die Auslösung oder Ausführung einer Bewegung des Cursors kann hierbei vor oder nach dem Einstellen einer Bewegungsrichtung des Cursors erfolgen. Bei Auslösung einer Bewegung vor dem Einstellen einer Bewegungsrichtung kommen als Defaultrichtung vorzugsweise in Frage die zuletzt eingestellte Bewegungsrichtung, die Bewegung entlang einer zuvor eingestellten Route oder in Richtung eines zuvor eingegebenen Ziels. Die Anfangsrichtung des Cursors kann dann während der Bewegung des Cursors durch Drehung des Drehschalters in die gewünschte Richtung geändert werden.

Wird die Bewegung des Cursors durch axiale Krafteinwirkung auf den Drehschalter, zum Beispiel über eine vorbestimmte Zeit, ausgelöst, ergibt sich der Vorteil, dass besonders bei einer längeren Bewegung des Cursors in eine Richtung nicht wie bei längerem Drehen des Drehschalters in eine Richtung immer wieder nachgegriffen werden muss, sondern, dass die Hand oder die Finger während der Cursorbewegung in gleicher Weise an dem Drehschalter positioniert bleiben können.

Es kann weiterhin vorgesehen werden, dass durch Drehung des Drehschalters in einem weiteren Bedienmodus eine Funktion wählbar ist. Durch eine solche Ausführungsform wird die Anbringung zahlreicher Funktionstasten überflüssig und die Bedieneinheit der erfindungsgemäßen Navigationsvorrichtung bleibt übersichtlich. Durch die Funktion kann mindestens einer der weiteren Bedienmodi einstellbar sein. Der Bedienmodus könnte folglich auch durch Drehung des Drehschalters gewählt werden, wodurch eine sehr große Anzahl von verschiedenen Bedienmodi wählbar ist, so dass mit dem Drehschalter alle für die Benutzung der Navigationsvorrichtung notwendigen Bedienschritte durchgeführt werden können.

Einer weiteren Ausführungsform der Erfindung sieht vor, dass der Bedienmodus und/oder mindestens einer der weiteren Bedienmodi durch die Betätigung mindestens eines weiteren Dreh-, Druck- und/oder Schiebeschalters einstellbar ist. Diese Ausführung ist insbesondere dann von großem Vorteil, wenn der Bedienmodus sehr häufig gewechselt werden muss.

Bei einer vorteilhaften Weiterbildung der Erfindung ist mindestens einer der weiteren Bedienmodi durch mindestens eine axiale Krafteinwirkung über eine vorbestimmte Zeit auf den Drehschalter, vorzugsweise gegen eine Federkraft, einstellbar. Diese Weiterbildung ist besonders leicht zu bedienen, wenn nur wenige Bedienmodi genutzt werden.

Im Folgenden wird eine Ausführungsform der Erfindung anhand von Zeichnungen beschrieben.

Es zeigt
- Figur 1:: eine schematische Darstellung eines Drehschalters der erfindungsgemäßen Navigationsvorrichtung in einer Aufsicht;
- Figur 2:: eine schematische Darstellung des Drehschalters gemäß Figur 1 in einer Seitenansicht; und
- Figur 3:: eine schematische Darstellung eines Monitors der erfindungsgemäßen Navigationsvorrichtung.

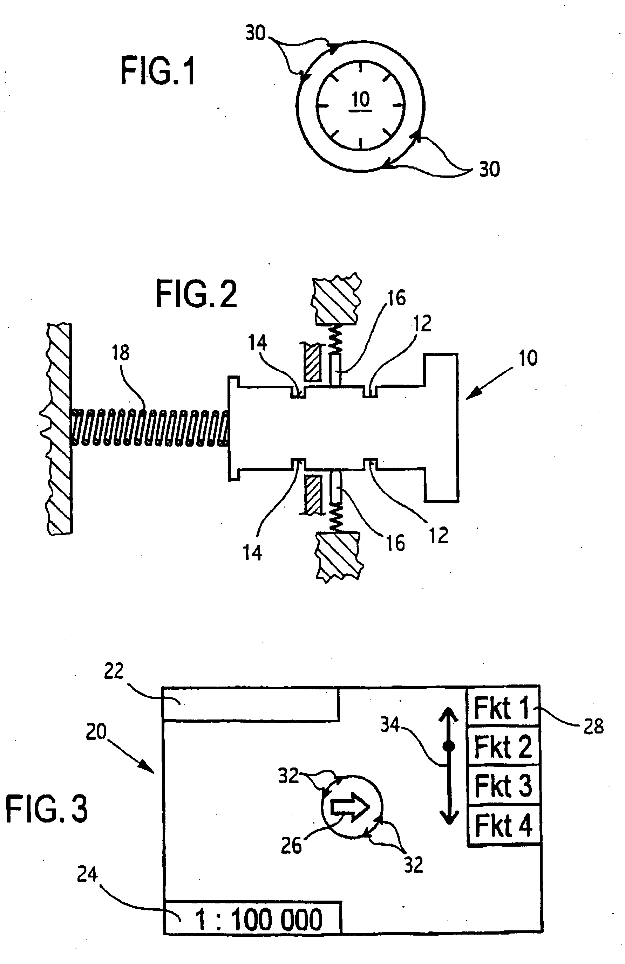

In einer für den Benutzer ergonomisch günstigen Lage ist in einem Kraftfahrzeug ein Drehschalter 10 angebracht, der in den Figuren 1 und 2 dargestellt ist. Dieser Drehschalter 10 wird neben der Bedienung der Navigationsvorrichtung auch für andere Zwecke, d.h. für die Bedienung anderer Vorrichtungen im Kraftfahrzeug verwendet, beispielsweise zum Bedienen eines Autotelefons, eines CD-Spielers und dergleichen. Dieser Drehschalter 10 ist, wie durch die Pfeile 30 angedeutet, mit und entgegen dem Uhrzeigersinn drehbar und außerdem durch eine axiale Bewegung in verschiedene Stellungen überführbar, wobei der Benutzer bei dem Übergang zwischen den einzelnen Axialstellungen eine haptische Rückmeldung erfährt. Der Drehschalter 10 weist eine erste Vertiefung 12 und eine zweite Vertiefung 14 auf, in die Rastelemente 16 einrasten können, so dass der Drehschalter 10 in zwei verschiedenen Axialstellungen fixiert werden kann. Eine Bewegung aus der in Figur 2 gezeigten Gleichgewichtsposition heraus erfolgt gegen die Kraft einer Feder 18.

Die Navigationsvorrichtung weist außerdem einen Monitor 20 auf, der in Figur 3 schematisch abgebildet ist und in einem Kraftfahrzeug so angebracht wird, dass er für den Benutzer gut sichtbar ist.

Die einzelnen Axialstellungen sind mit verschiedenen Bedienmodi korreliert, wobei die Bedienmodi und ihre Einstellung nachfolgend anhand der Figuren 2 und 3 beschrieben werden.

Eine erste Axialstellung ist durch Drücken des Drehschalters 10 bis zu einem merklichen Anschlag einzustellen, wobei die Rastelemente 16 in die erste Vertiefung 12 einrasten. Auf dem Monitor 20 wird in einem ersten Anzeigefeld 22 der Bedienmodus "Maßstabsänderung" angezeigt. Außerdem wird auf dem Monitor 20 in einem zweiten Anzeigefeld 24 ein Anzeigezeichen dargestellt, das einen aktuellen Maßstab einer abgebildeten Landkarte wiedergibt. Durch die Drehung des Drehschalters 10 kann nun der Maßstab der Landkarte verändert werden, wobei die Landkarte im jeweils aktuellen Maßstab gleichzeitig auf dem Monitor 20 angezeigt wird. Wird die Drehbewegung des Drehschalters 10 eingestellt, wird der aktuelle Abbildungsmaßstab gespeichert und bleibt bis zu einer nachfolgenden Maßstabsänderung erhalten.

Eine zweite Axialstellung ist ausgehend von der ersten Axialstellung durch leichten Druck auf den Drehschalter 10 gegen die Federkraft 18 zu erreichen. In dieser Stellung rastet der Drehschalter 10 nicht ein, wird jedoch diese Stellung über eine vorbestimmte Zeit eingenommen, läßt sich dadurch ein weiterer Bedienmodus wählen. Der dadurch gewählte Bedienmodus "Cursorbewegung-Pfeilrichtung" wird wiederum auf dem Monitor 20 in dem ersten Anzeigefeld 22 angezeigt. Auf dem Monitor 20 ist nun ebenfalls ein Cursor 26 zu erkennen, der beginnt, sich in einer Defaultrichtung zu bewegen. Die Geschwindigkeit der Cursorbewegung kann mit dem Abbildungsmaßstab der Landkarte in geeigneter Weise korreliert sein. Durch Drehung des Drehschalters 10 kann eine Änderung der Bewegungsrichtung des Cursors 26 herbeigeführt werden, wie durch die Pfeile 32 angedeutet wird. Hierbei kann der Cursor 26 als Pfeil auf dem Monitor 20 dargestellt sein, um seine Bewegungsrichtung zu verdeutlichen. Durch ein nochmaliges Drücken des Drehschalters 10 in die zweite axiale Stellung über eine vorbestimmte Zeit kann der Bedienmodus "Cursorbewegung-Pfeilrichtung" wieder verlassen werden.

Eine dritte Axialstellung ist ausgehend von der ersten Axialstellung durch leichtes Anziehen des Drehschalters 10 zu erreichen. Dabei rasten die Rastelemente 16 für den Benutzer spürbar in die zweite Vertiefung 14 des Drehschalters 10 ein. Eine vorher ausgewählte Route wird auf der Landkarte optisch hervorgehoben und außerdem wird der aktuelle Bedienmodus "Cursorbewegung-Route" in dem ersten Anzeigefeld 22 auf dem Monitor 20 angezeigt. Durch die Drehung des Drehschalters 10 läßt sich der Cursor 26 entlang der zuvor ausgewählten Route bewegen.

Ausgehend von der dritten Axialstellung gelangt man in die vierte Axialstellung durch Ziehen am Drehschalter 10.

In einer Ausgestaltung der Navigationsvorrichtung ist eine Abbildung aufrufbar, die ein Menü 28 mit mindestens einer Funktion aufweist.

Eine Weiterbildung der Navigationsvorrichtung sieht vor, dass durch die Funktion Informationen zu einem einer aktuellen Cursorposition entsprechenden Punkt oder zu einem Umkreis des entsprechenden Punktes auf der Landkarte abrufbar sind.

Es kann weiterhin vorgesehen sein, dass durch die Funktion der der aktuellen Cursorposition entsprechende Punkt auf der Landkarte als Ziel oder Zwischenziel setzbar ist.

In einer weiteren Ausgestaltung der Navigationsvorrichtung ist der Bedienmodus und/oder mindesten einer der weiteren Bedienmodi durch eine axiale Bewegung des Drehschalters 10 einstellbar.

Bei einer weiteren alternativen Ausführungsform kann die Cursorbewegungsrichtung bei Stillstand des Cursors 26 eingestellt werden. Nach erfolgter Einstellung kann dann durch Betätigung des Drehschalters 10 eine Bewegung des Cursors 26 in dieser Richtung ausgelöst werden, wobei diese Richtung durch Drehen des Drehschalters 10 modifiziert werden kann.

In einer weiteren alternativen Ausführungsform kann ein Umschalten der Betriebsmodi zum Beispiel durch einen gegen eine Federkraft 18 gelagerten Drehschalter 10 erfolgen, wobei die verschiedenen Betriebsmodi zyklisch durchlaufen werden und ein einmaliges kurzes Drücken des Drehschalters 10 mit einem ersten Betriebsmodus, ein zweimaliges kurz hintereinander erfolgtes Drücken mit einem zweiten Betriebsmodus usw. korreliert ist.

## Patentansprüche

1. Navigationsvorrichtung zum Einbau in ein Kraftfahrzeug, die einen Monitor (20) aufweist, auf dem eine Abbildung mit einem Cursor darstellbar ist, wobei die Navigationsvorrichtung einen Drehschalter umfasst,
**dadurch gekennzeichnet, dass** durch Drehung des Drehschalters (10):
- in einem ersten Bedienmodus des Drehschalters als eine erste Aufgabe unabhängig von einer Bewegung des Cursors eine Bewegungsrichtung des Cursors (26) auf der Abbildung wählbar ist; und
- in einem zweiten, vom ersten verschiedenen Bedienmodus des Drehschalters die Bewegung des Cursors (26) entlang oder entgegen der ausgewählten Bewegungsrichtung ausführbar ist;
wobei
- durch eine axiale Krafteinwirkung auf den Drehschalter (10) die Bewegung des Cursors (26) entlang oder entgegen der ausgewählten Bewegungsrichtung ausführbar oder auslösbar ist; oder
- der erste Bedienmodus und/oder zweite Bedienmodus durch eine axiale Bewegung des Drehschalters (10) einstellbar ist.

2. Navigationsvorrichtung nach Anspruch 1,
**dadurch gekennzeichnet,**
**dass** durch Drehung des Drehschalters (10) in einem dritten Bedienmodus der Maßstab der Abbildung wählbar ist.

3. Navigationsvorrichtung nach Anspruch 2,
**dadurch gekennzeichnet,**
**dass** der Mittelpunkt der Abbildung bei der Maßstabswahl erhalten bleibt.

4. Navigationsvorrichtung nach einem der vorhergehenden Ansprüche,
**dadurch gekennzeichnet,**
**dass** die Bewegungsrichtung des Cursors (26) während der Bewegung des Cursors (26) oder bei Stillstand des Cursors (26) durch Drehung des Drehschalters (10) in dem ersten Bedienmodus änderbar ist.

5. Navigationsvorrichtung nach einem der vorhergehenden Ansprüche,
**dadurch gekennzeichnet,**
**dass** durch eine axiale Krafteinwirkung auf den Drehschalter (10) oder durch Drehung des Drehschalters (10) in einem vierten Bedienmodus die Bewegung des oder eines Cursors (26) entlang einer vorbestimmten Route auf der Abbildung, insbesondere einer Landkarte, ausführbar ist.

6. Navigationsvorrichtung nach einem der vorhergehenden Ansprüche,
**dadurch gekennzeichnet,**
**dass** eine Abbildung aufrufbar ist, die ein Menü (28) mit mindestens einer Funktion aufweist.

7. Navigationsvorrichtung nach einem der vorhergehenden Ansprüche,
**dadurch gekennzeichnet,**
**dass** durch Drehung des Drehschalters (10) in einem fünften Bedienmodus eine Funktion wählbar ist.

8. Navigationsvorrichtung nach einem der Ansprüche 6 oder 7,
**dadurch gekennzeichnet,**
**dass** die Abbildung eine Landkarte umfasst und dass durch die Funktion Informationen zu einem einer aktuellen Cursorposition entsprechenden Punkt oder zu einem Umkreis des entsprechenden Punktes auf der Landkarte abrufbar sind.

9. Navigationsvorrichtung nach einem der Ansprüche 6 bis 8,
**dadurch gekennzeichnet,**
**dass** die Abbildung eine Landkarte umfasst und dass durch die Funktion ein einer aktuellen Cursorposition entsprechender Punkt auf der Landkarte als Ziel oder Zwischenziel setzbar ist.

10. Navigationsvorrichtung nach Anspruch 6,
**dadurch gekennzeichnet,**
**dass** durch die Funktion der erste Bedienmodus und/oder mindestens einer der weiteren Bedienmodi einstellbar ist.

## Claims

1. Navigation device for installation in a motor vehicle, having a monitor (20), on which an image can be displayed with a cursor, wherein the navigation device comprises a rotary switch, **characterised in that** through turning of the rotary switch (10):
- in a first operating mode of the rotary switch a direction of motion of the cursor (26) on the image can be selected as a first task independently of a motion of the cursor; and
- in a second operating mode of the rotary switch, different from the first, the movement of the cursor (26) can be executed along or contrary to the selected direction of motion;
wherein
- the motion of the cursor (26) along or contrary to the selected direction of motion can be executed or triggered through an axial action of force on the rotary switch (10); or
- the first operating mode and/or second operating mode can be adjusted through an axial motion of the rotary switch (10).

2. Navigation device according to claim 1, **characterised in that** the scale of the image can be selected through turning of the rotary switch (10) in a third operating mode.

3. Navigation device according to claim 2, **characterised in that** the centre point of the image is retained upon selection of the scale.

4. Navigation device according to any one of the previous claims, **characterised in that** the direction of motion of the cursor (26) can be changed, when the cursor (26) is in motion or when the cursor (26) is stationary, through turning of the rotary switch (10) in the first operating mode.

5. Navigation device according to any one of the previous claims, **characterised in that** the motion of the or a cursor (26) along a predetermined route on the image, especially a map, can be executed through an axial action of force on the rotary switch (10) or through turning of the rotary switch (10) in a fourth operating mode.

6. Navigation device according to any one of the previous claims, **characterised in that** an image having a menu (28) with at least one function can be accessed.

7. Navigation device according to any one of the previous claims, **characterised in that** a function can be selected through turning of the rotary switch (10) in a fifth operating mode.

8. Navigation device according to any one of claims 6 or 7, **characterised in that** the image comprises a map and that information on a point corresponding to a current cursor position or on an area surrounding the corresponding point on the map can be accessed through the function.

9. Navigation device according to any one of claims 6 to 8, **characterised in that** the image comprises a map and that a point corresponding to a current cursor position on the map can be set as destination or intermediate destination through the function.

10. Navigation device according to claim 6, **characterised in that** the first operating mode and/or at least one of the further operating modes can be adjusted through the function.

## Revendications

1. Dispositif de navigation destiné à être intégré dans un véhicule automobile, qui comporte un écran (20) sur lequel peut être représentée une image avec un curseur, lequel dispositif de navigation comprend un commutateur rotatif,
**caractérisé en ce que**
par la rotation du commutateur rotatif (10) :
- dans un premier mode de fonctionnement du commutateur rotatif, comme première tâche indépendamment d'un déplacement du curseur, une direction de déplacement du curseur (26) sur l'image peut être choisie ; et
- dans un deuxième mode de fonctionnement du commutateur rotatif, différent du premier, le déplacement du curseur (26) le long ou à l'opposé de la direction de déplacement choisie peut être exécuté ;
dans lequel
- par une force agissant de façon axiale sur le commutateur rotatif (10), le déplacement du curseur (26) le long ou à l'opposé de la direction de déplacement choisie peut être exécuté ou déclenché ; ou
- le premier mode de fonctionnement et/ou le deuxième mode de fonctionnement peut être réglé par un déplacement axial du commutateur rotatif (10).

2. Dispositif de navigation selon la revendication 1,
**caractérisé en ce que**, par la rotation du commutateur rotatif (10) dans un troisième mode de fonctionnement, l'échelle de l'image peut être choisie.

3. Dispositif de navigation selon la revendication 2,
**caractérisé en ce que** le centre de l'image est maintenu lors du choix d'échelle.

4. Dispositif de navigation selon l'une quelconque des revendications précédentes,
**caractérisé en ce que** pendant le déplacement du curseur (26) ou lors de l'immobilité du curseur (26), la direction de déplacement du curseur (26) peut être modifiée par la rotation du commutateur rotatif (10) dans le premier mode de fonctionnement.

5. Dispositif de navigation selon l'une quelconque des revendications précédentes,
**caractérisé en ce que**, par une force agissant de façon axiale sur le commutateur rotatif (10) ou par la rotation du commutateur rotatif (10) dans un quatrième mode de fonctionnement, le déplacement du ou d'un curseur (26) le long d'un trajet prédéterminé sur l'image, en particulier sur une carte géographique, peut être exécuté.

6. Dispositif de navigation selon l'une quelconque des revendications précédentes,
**caractérisé en ce qu'**une image qui présente un menu (28) avec au moins une fonction peut être appelée.

7. Dispositif de navigation selon l'une quelconque des revendications précédentes,
**caractérisé en ce que**, par la rotation du commutateur rotatif (10) dans un cinquième mode de fonctionnement, une fonction peut être choisie.

8. Dispositif de navigation selon l'une quelconque des revendications 6 ou 7,
**caractérisé en ce que** l'image comprend une carte géographique et **en ce que**, par la fonction, des informations concernant un point correspondant à une position de curseur actuelle ou une périphérie du point correspondant sur la carte géographique peuvent être appelées.

9. Dispositif de navigation selon l'une quelconque des revendications 6 à 8,
**caractérisé en ce que** l'image comprend une carte géographique et **en ce que**, par la fonction, un point correspondant à une position de curseur actuelle sur la carte géographique peut être spécifié comme destination ou destination intermédiaire.

10. Dispositif de navigation selon la revendication 6,
**caractérisé en ce que**, par la fonction, le premier mode de fonctionnement et/ou au moins l'un des autres modes de fonctionnement peuvent être réglés.
